# EUROPEAN PATENT APPLICATION

(11) **EP 3 023 298 A1**
(43) Date of publication of application: **25.05.2016**
(21) Application number: 14846107.2
(22) Date of filing: 26.02.2014
(51) Int. Cl.: B60N 3/02, F16B 5/06, F16B 19/10

(54) **ASSIST GRIP**

(30) Priority: 19.09.2013 JP 2013194464
(71) Applicant: Howa Plastics Co., Ltd., Aichi 470-0496 (JP)
(72) Inventor: KAJIO, Hideki, Toyota-shi Aichi 470-0496 (JP)
(74) Representative: Kramer Barske Schmidtchen Patentanwälte PartG mbB
(86) International application number: PCT/JP2014/054740
(87) International publication number: WO 2015/040872

(57) **Abstract**

Provided is an assist grip that is mounted by inserting a mounting clip (5) and a clip support portion (42) of a cover (4) into a rectangular hole provided on a body panel and securing a hinge assembly (2, 3) to the body panel. A resilient bulging portion (52) of the mounting clip (5) is provided at both sides of a leading end portion thereof with second retention portions (57) that abut against an inner side of the body panel in such a manner as to obliquely open outward and provided at a middle of the leading end portion with a first retention portion (53) that abuts against a periphery of the rectangular hole of the body panel in an inwardly bent manner. Inclined side portions (52a) are formed at both sides of the resilient bulging portion (52) so that the resilient bulging portion (52) has a width of its base portion shorter than a width of the leading end portion.

## Description

### Technical Field

The present invention relates to an assist grip to be mounted on a ceiling surface, wall surface, or the like inside a vehicle compartment, and more particularly, to an assist grip which can achieve an improvement in mounting durability and allows easily performing mounting work to a body panel.

### Background Art

Assist grips are installed on a ceiling surface inside a vehicle compartment to provide a support for vehicle occupants in the compartment. This kind of assist grips having such a structure that hinge cavities are formed at opposite sides of a grip body and hinge assemblies are installed in the hinge cavities in a rotatable fashion, and the grip body is rotatably mounted via the hinge assemblies provided at opposite sides have been used in various automobiles.

As disclosed in Patent Literature 1 shown below, this assist grip includes on the hinge assemblies at opposite sides thereof mounting clips made of metal, and is mounted by the mounting clips so as to be secured to a body panel of a vehicle body. The mounting clip is formed of a metal having spring resiliency into a substantially U-shape, and fitted into a hinge body so as to cover a center support plate of the hinge body of the hinge assembly. When the assist grip is assembled, into the hinge body thereof, a cover is provisionally assembled from the front side by inserting a clip support portion thereof into the inside of the mounting clip.

For mounting on the vehicle body, first, the mounting clips are fitted into rectangular holes formed on the body panel of the vehicle body to retain retention portions of bulging portions provided at both sides of each of the mounting clips by the periphery of the rectangular hole of the body panel. At this time, the mounting clip elastically deforms resilient legs and bulging portions at both sides thereof while entering into the rectangular holes of the body panel, and makes the retention portions be retained by the periphery of the rectangular hole to be mounted at the point in time of having entered up to a predetermined position. Then, by pushing the provisionally assembled cover into the hinge body from the front to the back side, the clip support portion is pushed into the inside of the mounting clip to make the resilient bulging portions of the mounting clip bulge laterally, so as to secure the assist grip to the body panel.

### Citation List

### Patent Literature

Patent Literature 1: JP2009-121633 A

### Summary of Invention

### Technical Problem

Meanwhile, recently, the assist grips for automobiles have been used more frequently, when vehicle occupants get in or out of vehicles, in a manner of directly placing their own weight on the assist grips, and therefore, the necessity has arisen for improving the assist grips in mounting durability from conventional ones.

Since the assist grip is mounted on the body panel by the action of the metal-made mounting clip incorporated in its hinge assembly, making the plate thickness of a metal plate that forms the mounting clip thicker can improve the assist grip in mounting durability.

However, when the assist grip is mounted on the body panel, the clip support portion and mounting clip of the assist grip are inserted into the rectangular hole of the body panel to perform assembly, as described above, in a manner of elastically deforming the resilient legs and bulging portions at both sides of the mounting clip inward while inserting into the rectangular hole of the body panel.

Therefore, in the mounting clip the metal plate being the material which has a thicker plate thickness, there has been a problem that the resilient legs and bulging portions are unlikely to be elastically deformed to increase insertion load when inserting the mounting clip into the rectangular hole of the body panel, and the assembling workability of the assist grip deteriorates.

The present invention has been made in view of the above problems, and an object thereof is to provide an assist grip which can improve mounting durability and allows easily performing mounting work to a body panel.

### Solution to Problem

In order to achieve the above object, an assist grip of the present invention includes a grip body including hinge cavities on bases provided at opposite left and right ends, hinge assemblies including a pair of hinge bodies to be pivotally connected to the hinge cavities at opposite sides via pivot shafts, mounting clips each formed by bending a metal having spring resiliency into a substantially U-shape and with resilient legs provided at both sides, the resilient legs at both sides including resilient bulging portions bulging outward, and the mounting clips to be respectively inserted into rectangular openings provided substantially at the center of the pair of hinge bodies, and covers each including a pair of plate-shaped clip support portions inserted into the inside of the resilient legs at both sides of the mounting clip and provided in a projecting manner in parallel, and to be fitted to the hinge body so as to cover a front surface of the hinge assembly, the assist grip being mounted by inserting the mounting clip and the clip support portion of the cover into a rectangular hole provided on the body panel and securing the hinge assembly to the body panel, characterized in that the resilient bulging portion of the mounting clip is provided at both sides of a leading end portion thereof with second retention portions that abut against an inner side of the body panel in such a manner as to obliquely open outward and provided at a middle of the leading end portion with a first retention portion that abuts against a periphery of the rectangular hole of the body panel in an inwardly bent manner, and is formed at both sides with inclined side portions so that the resilient bulging portion has a width of its base portion shorter than a width of the leading end portion.

According to the assist grip of the invention,
even when the plate thickness of the metal plate being the material for the mounting clip is made thicker to increase the mounting durability of the assist grip, the bulging resilient bulging portions become likely to be elastically deformed inward when inserting the mounting clip into the rectangular hole of the body panel, so that the assembling work of the assist grip can be easily performed without increasing the insertion load.

Here, in the above-described assist grip, it is preferable that the base portion of the resilient bulging portion is formed with a width dimension that is 1/3 to 2/3 times a width dimension of the leading end portion of the resilient bulging portion. Moreover, it is preferable that the base portion of the resilient bulging portion is formed with a width dimension that is 4 to 6 times a thickness dimension of the metal plate of the mounting clip. According thereto, the mounting durability when the assist grip is mounted on the body panel can be improved from that of a conventional one by making the plate thickness of the mounting clip substantially thicker than that of a conventional one, and moreover the mounting work thereof can be easily performed.

### Advantageous Effects of invention

The assist grip of the present invention can achieve an improvement in durability of the mounting clip, and easily perform mounting work to a body panel.

### Brief Description of Drawings

Fig. 1 is a perspective view of an assist grip as viewed from the back showing an embodiment of the present invention.
Fig. 2 is a bottom view of the assist grip.
Fig. 3 is a right side view of the assist grip.
Fig. 4 is an exploded perspective view of the assist grip as viewed from the back.
Fig. 5 is an exploded perspective view of a right hinge assembly 2 as viewed from the back.
Fig. 6 is an exploded perspective view of a left hinge assembly 3 as viewed from the back.
Fig. 7(a) is a perspective view from the bottom side of a cover, Fig. 7(b) is a right side view of the cover, Fig. 7(c) is a bottom view of the cover, and Fig. 7(d) is a plan view of the cover.
Fig. 8(a) is a perspective view of a hinge body, Fig. 8(b) is a perspective view of the hinge body and cover, and Fig. 8(c) is a perspective view of the cover in a provisionally assembled state relative to the hinge body.
Fig. 9 is an enlarged perspective view of a mounting clip.
Fig. 10 is a front view of the mounting clip.
Fig. 11 (a) is a side view of the mounting clip, and Fig. 11 (b) is a plan view of the mounting clip.
Fig. 12 is an enlarged sectional view taken along line XII-XII of Fig. 11.
Fig. 13 is a diagram illustrating the assembling of the assist grip to a hinge assembly by sectional views.
Fig. 14 is a diagram illustrating the mounting of the assist grip on a body panel by a sectional view.
Fig. 15 is a diagram illustrating the provisionally assembled cover that has been pushed in by a sectional view.
Fig. 16 is a sectional view of the assist grip in a completely mounted state on the body panel.

### Description of Embodiments

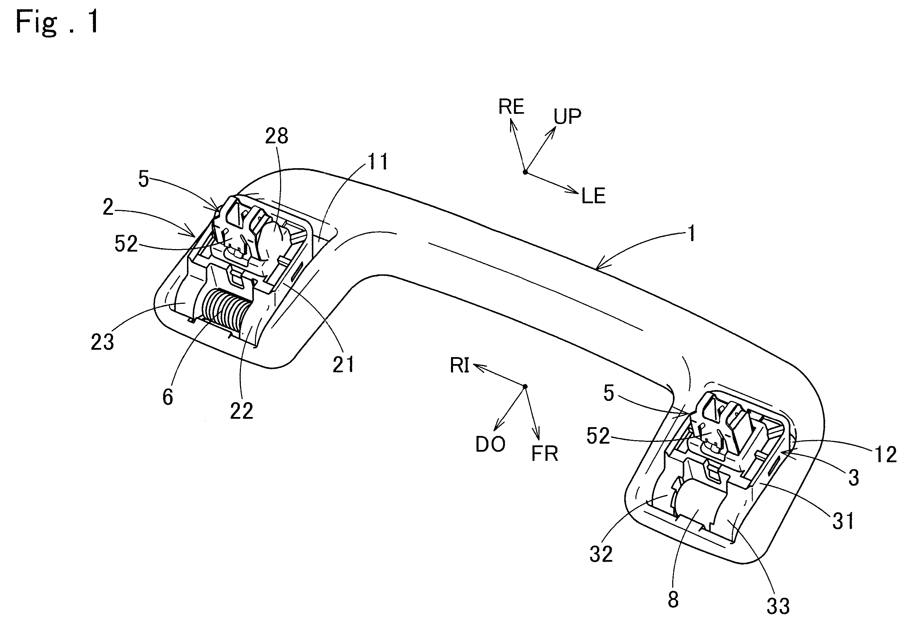

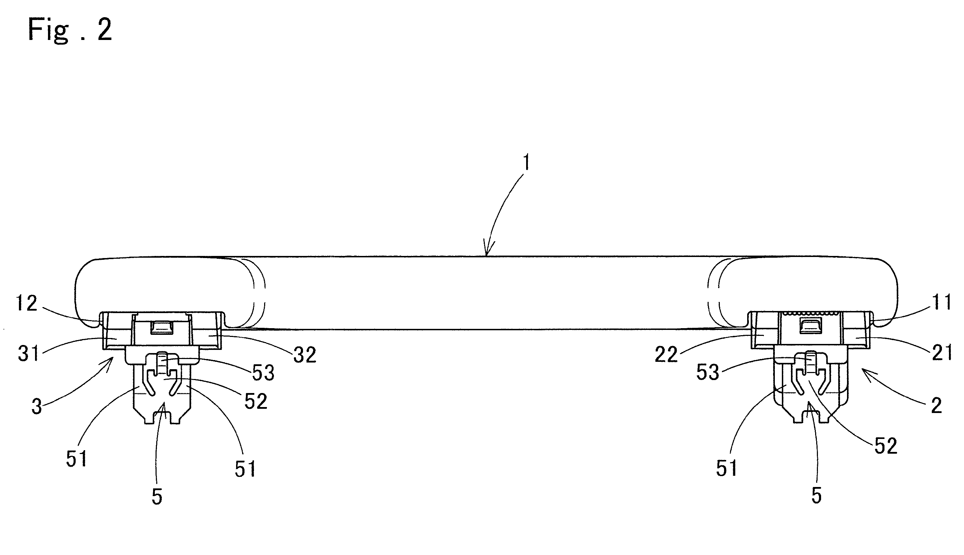

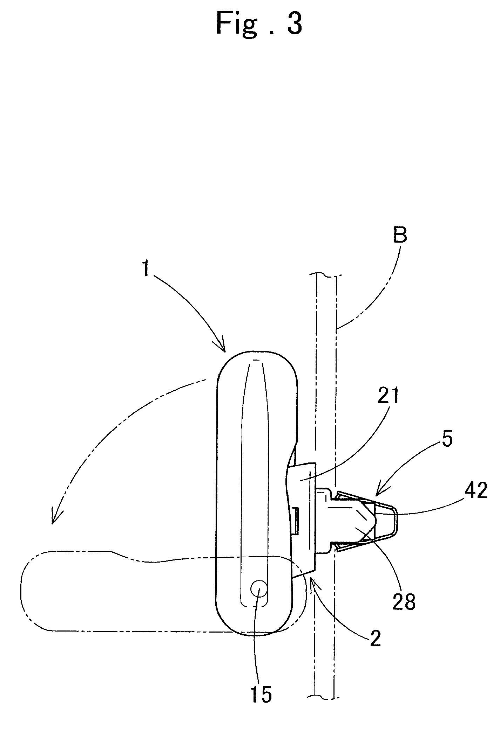

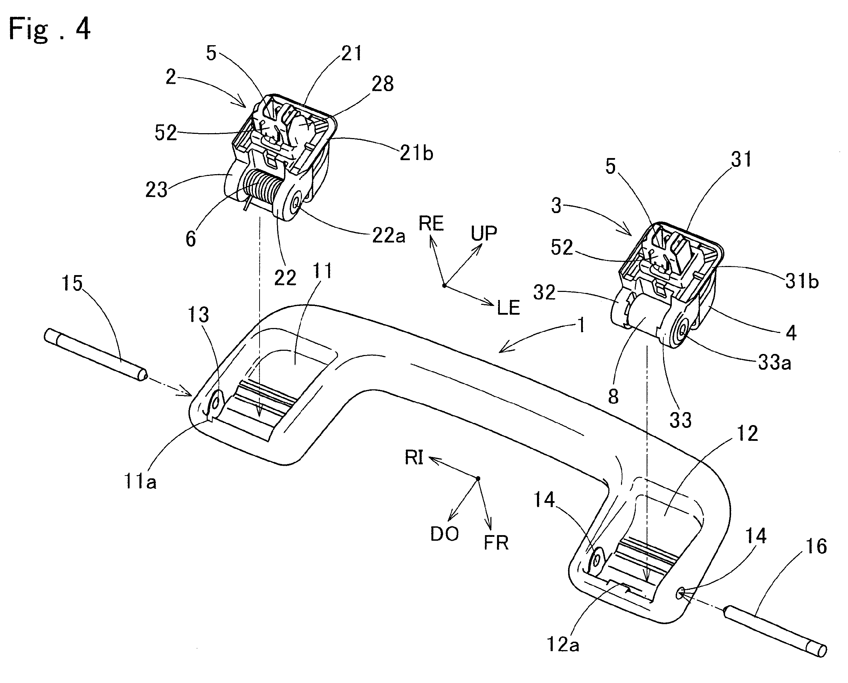

Hereinafter, an embodiment of the present invention will be described with reference to the drawings. Fig. 1 shows a perspective view of an assist grip as viewed from the back, Fig. 2 shows a bottom view thereof, Fig. 3 shows a right side view thereof, and Fig. 4 shows an exploded perspective view thereof. In addition, left, right, up, and down to be used in the following description refer to left, right, up, and down of an assist grip in a mounted posture as viewed from the front, and "FR," "LE," "RI," "UP," "RE," and "DO" used in the illustration refer to front, left, right, up, rear, and down, respectively.

In Fig. 1 to Fig. 4, a grip body 1 is integrally molded of a synthetic resin into a grip shape, and includes on the back of bases provided at opposite left and right ends thereof substantially rectangular hinge cavities 11, 12, respectively. At both left and right side wall portions inside the hinge cavities 11, 12 located at opposite sides, shaft holes 13, 14 are formed, respectively, and pivot shafts 15, 16 are respectively inserted through the shaft holes 13, 14 on the side wall portions as well as shaft holes 22a and 23a, 32a and 33a provided on inner supports 22, 32 and outer supports 23, 33 of hinge assemblies 2, 3, respectively, so that the respective hinge assemblies 2, 3 are pivotally supported relative to the grip body 1. A pair of the hinge assemblies 2, 3 are secured to a vehicle body of an automobile, and the grip body 1 is made rotatable between a non-use state and an in-use state relative to the hinge assemblies 2, 3.

As shown in Fig. 4, Fig. 5, and Fig. 6, the right hinge assembly 2 includes a hinge body 21, a mounting clip 5 made of a metal plate that is mounted by being fitted into the hinge body 21 from its front side, and inserted and engaged with a rectangular hole on a vehicle body panel, a cover 4 that is fitted to the hinge body 21 so as to cover its front side and makes a clip support portion 42 enter into a rectangular opening 27 in the hinge body 21 to support the mounting clip 5 from inside, and a torsion coil spring 6 that is mounted between the inner support 22 and the outer support 23 provided in a projecting manner at a lower portion of the hinge body 21.

The left hinge assembly 3 includes a hinge body 31, a mounting clip 5 that is mounted by being fitted into the hinge body 31 from the front side, and inserted and engaged with a rectangular hole on a vehicle body panel, a cover 4 that is fitted to the hinge body 31 so as to cover its front side and makes a clip support portion 42 enter into a rectangular opening 37 in the hinge body 31 to support the mounting clip 5 from inside, and an oil damper 8 that is inserted between the inner support 32 and the outer support 33 provided in a projecting manner at a lower portion of the hinge body 31, and applies a rotational load to the grip body 1.

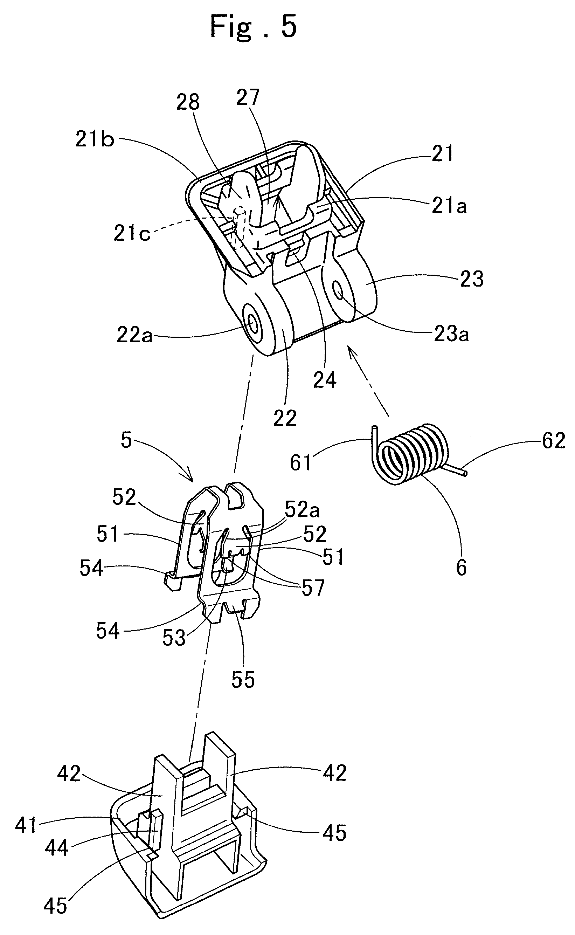

The hinge body 21 of the right hinge assembly 2 is, as shown in Fig. 5, formed into a cubic shape that is substantially quadrate in front view, and integrally molded of a synthetic resin with the inner support 22 and the outer support 23 provided in a projecting manner at a lower potion thereof. The hinge body 21 includes between the inner support 22 and the outer support 23 a space for the torsion coil spring 6, and a rectangular opening 27 is provided substantially at a central part of the hinge body 21. The hinge body 21 further includes at the back side of the rectangular opening 27 a rectangular frame 21 a provided in a projecting manner, and a seat portion 21 b formed at a part around and one step lower than the rectangular frame 21 a, for inserting the rectangular frame 21 a into the rectangular hole of the body panel and abutting the seat portion 21 b against the surface of the body panel when fitting the hinge body 21 into the rectangular hole.

The inner support 22 and the outer support 23 provided in a projecting manner at the lower side of the hinge body 21 include shaft holes 22a, 23a formed as through-holes, respectively. There is a structure where a pivot shaft 15 is inserted through the shaft holes 22a, 23a (Fig. 4), for pivotally supporting the hinge body 21 inside the hinge cavity 11 of the grip body 1. As in Fig. 5, the hinge body 21 is formed at both sides with cover engaging portions 24, with which engaging pawls 45 provided at the inner side of the cover 4 are engaged when the cover 4 is fitted to the front side of the hinge body 21.

Moreover, the rectangular opening 27 formed substantially at a central portion of the hinge body 21 is, as shown in Fig. 5, formed in a shape to allow insertion of the mounting clip 5 from its back side, and is formed in a shape to allow insertion of the clip support portion 42 provided in a projecting manner on the back side of the cover 4 when the cover 4 is fitted. Moreover, the hinge body 21 includes at one inner surface of the rectangular opening 27 a guide groove formed in a front and rear direction, that is, in an inserting direction of the cover 4, so that a guide rib 44 provided at one side surface of the clip support portion 42 of the cover 4 is fitted with the guide groove to slide in contact.

As shown in Fig. 5., the hinge body 21 includes at both sides of the rectangular opening 27 projections 28 provided projecting to the back side, so that when the hinge body 21 is fitted into the rectangular hole of the body panel for assembly, the outer surfaces of the projections 28 contact both left and right edges of the rectangular hole to prevent the hinge body and the grip body 1 from rattling in a left and right direction.

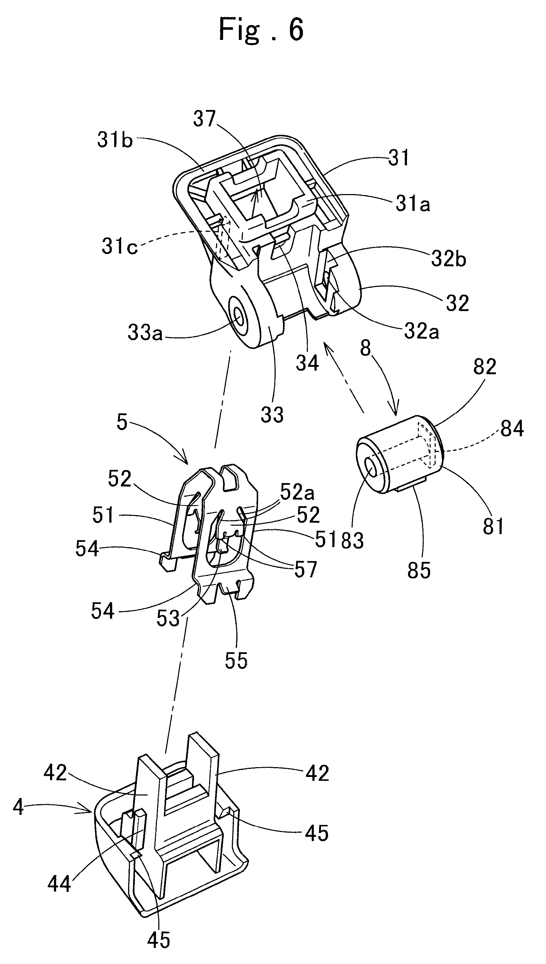

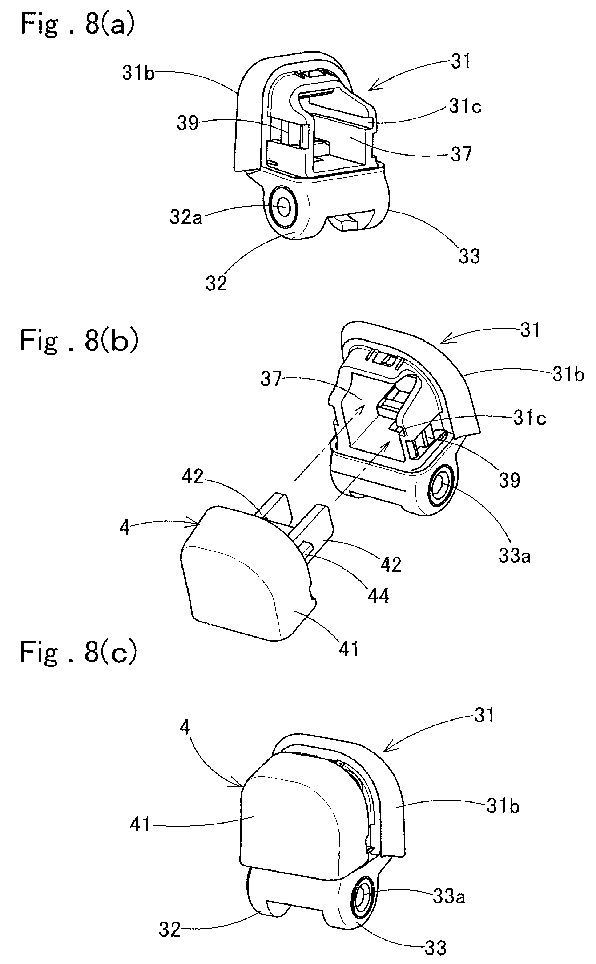

As shown in Fig. 6 and Fig. 8(a) to Fig. 8(c), almost similar to the right hinge body 21 described above, the hinge body 31 of the left hinge assembly 3 is formed into a cubic shape that is substantially quadrate in front view, and integrally molded of a synthetic resin with the inner support 32 and the outer support 33 provided in a projecting manner at a lower potion thereof. The hinge body 31 includes between the inner support 32 and the outer support 33 a space for the oil damper 8, and a rectangular opening 37 is provided substantially at a central part of the hinge body 31. The hinge body 31 further includes at the back side of the rectangular opening 37 a rectangular frame provided in a projecting manner, and a seat portion 31 b formed at a part around and one step lower than the rectangular frame. The seat portion 31 b is formed for inserting the rectangular frame 31 a into the rectangular hole Bh of the body panel B so as to abut the seat portion 31 b against the surface of the body panel B when fitting the hinge body 31 into the rectangular hole.

As shown in Fig. 6 and Fig. 8(a) to Fig. 8(c), the inner support 32 and the outer support 33 provided in a projecting manner at the lower portion of the hinge body 31 include shaft holes 32a, 33a formed as through-holes, respectively. This is a structure where a pivot shaft 16 is inserted through the shaft holes 32a, 33a, for pivotally supporting the hinge body 31 inside the hinge cavity 12 of the grip body 1. As in Fig. 8(a) to Fig. 8(c), the hinge body 31 is formed at both sides with cover engaging portions 39, with which engaging pawls 45 on the cover 4 are engaged when the cover 4 is fitted to the front side of the hinge body 31.

Moreover, the rectangular opening 37 formed substantially at a central portion of the hinge body 31 is, as shown in Fig. 6, formed in a shape to allow insertion of the mounting clip 5 from its back side, and is formed in a shape to allow insertion of the clip support portion 42 provided in a projecting manner on the back side of the cover 4 when the cover 4 is fitted. Moreover, on one inner surface of the rectangular opening 37 of the hinge body 31, as shown in Fig. 8(a) to Fig. 8(c), a guide groove 31 c is formed in a front and rear direction, that is, in an inserting direction of the cover 4, so that a guide rib 44 provided at one side surface of the clip support portion 42 of the cover 4 is fitted with the guide groove 31 c to slide in contact.

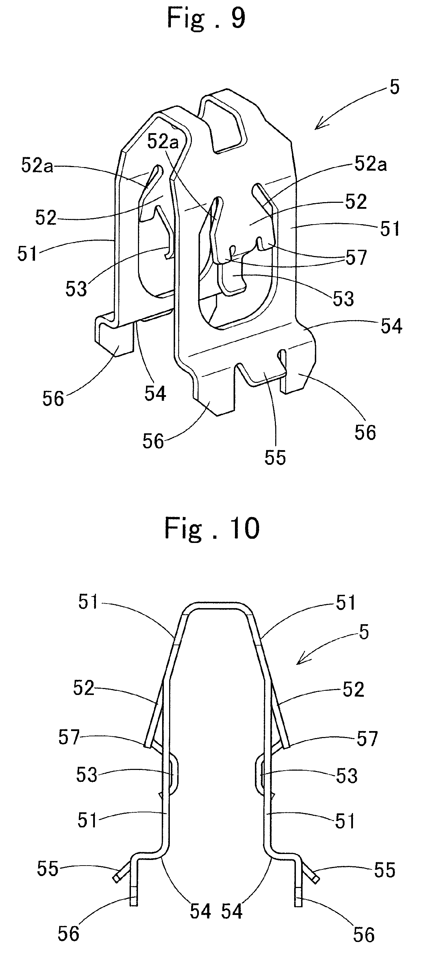

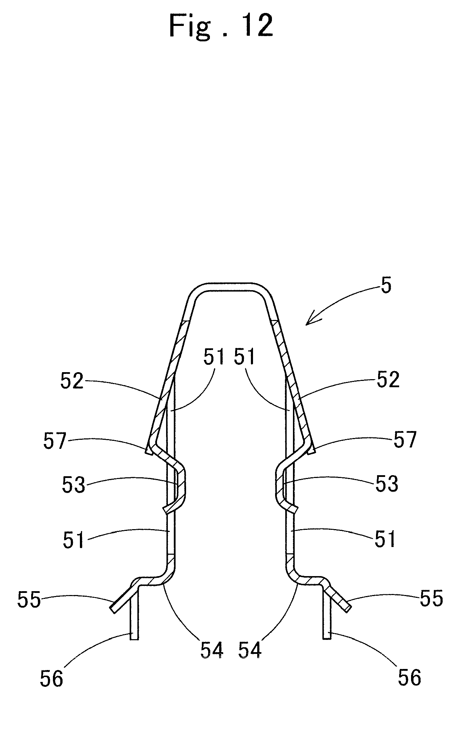

The mounting clips 5 are inserted and fitted from the front side into the rectangular openings 27, 37 of the hinge bodies 21, 31, respectively. The mounting clips 5 are each formed, as shown in Fig. 9 to Fig. 12, by bending a metal plate having spring resiliency into a substantially U-shape, and thus formed at both sides with resilient legs 51 having spring resiliency. Moreover, the resilient legs 51 at both sides each include a resilient bulging portion 52 formed by cutting and raising outward a part of the inner region of the leg 51 so as to project.

As the metal plate having spring resiliency to form the mounting clip 5, a steel plate having a plate thickness thicker than that of a conventionally used mounting clip (a steel plate having a plate thickness of, for example, 1.4 times that of a conventionally used steel plate) is used. When the assist grip is secured to a body panel on a side wall or the like inside a vehicle compartment, the mounting clip 5 is retained on the inner side of the body panel B to produce a mounting strength of the assist grip.

In the present assist grip, by using the mounting clip 5 formed of a steel plate thicker in plate thickness than a conventional one (for example, a steel plate having a thickness of 1.4 times the plate thickness of a conventional mounting clip), the assist grip is improved in mounting durability. For example, even when the vehicle occupant repeatedly uses the assist grip in a manner of placing his/her weight on the assist grip, deformation of the mounting clip 5 is suppressed to increase the mounting durability of the assist grip.

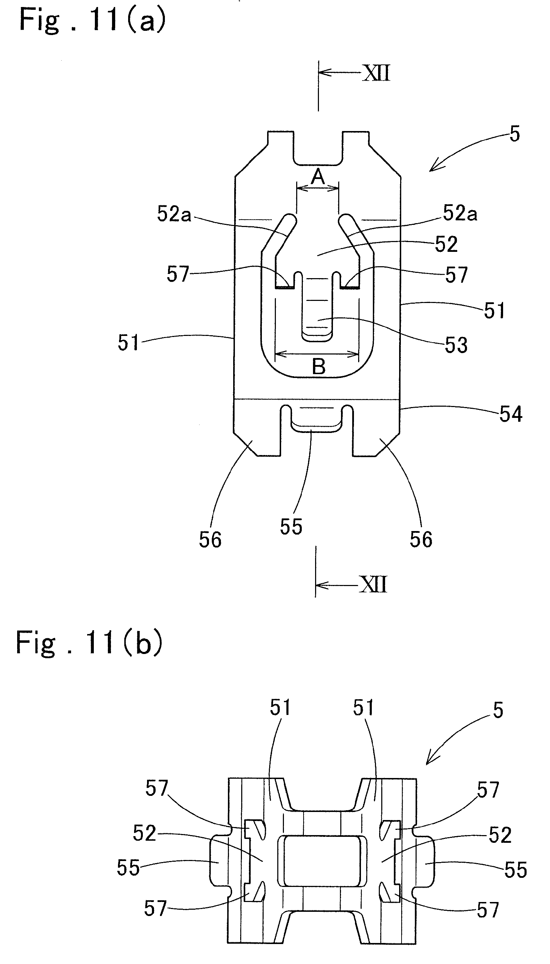

In the case where the mounting clip made of a metal plate having a plate thickness of 1.4 times that of a conventional mounting clip is used, during mounting of the assist grip, the resilient bulging portions 52 become unlikely to bend (be elastically deformed) inward when the mounting clip 5 is inserted into the rectangular hole Bh of the body panel B, which makes the mounting work difficult and deteriorates its workability. Thus, in the mounting clip 5, as shown in Fig. 11, the resilient bulging portion 52 is formed at both sides with inclined side portions 52a so that the resilient bulging portion 52 has a width dimension A of its base portion shorter than a width dimension B of its leading end portion, and the inclined side portions 52a bring the resilient bulging portion 52 into a form of tapering from the leading end portion side toward the base portion. The inclined side portion 52a is linearly formed in Fig. 11, but is of a concept in which a curved side portion is also included. Thus, during the insertion into the rectangular hole Bh, the resilient bulging portion 52 is elastically deformed inward at a smaller load to make the insertion easy.

Specifically, the base portion of the resilient bulging portion 52 is formed with a width dimension A that is 1/3 to 2/3 times the width dimension B of the leading end portion of the resilient bulging portion 52. Moreover, the width dimension A of the base portion of the resilient bulging portion 52 is provided as 4 to 6 times the thickness dimension of the metal plate of the mounting clip 5. Thus, the inward elastic deformation of the resilient bulging portion 52 is made easy, and mounting durability necessary for the assist grip is obtained.

Here, if the width dimension A of the base portion is shorter than 1/3 times the width dimension B of the leading end portion, the resilient bulging portion 52 is lowered in strength to be unlikely to obtain the necessary mounting durability. On the other hand, if the width dimension A of the base portion is longer than 2/3 times the width dimension B of the leading end portion, the resilient bulging portions 52 are unlikely to be elastically deformed inward when the mounting clip 5 is inserted into the rectangular hole Bh of the body panel B, and the assembling workability is likely to deteriorate.

Moreover, if the width dimension A of the base portion of the resilient bulging portions 52 is shorter than 4 times the thickness dimension of the metal plate of the mounting clip 5, a necessary mounting strength of the assist grip is unlikely to be obtained, and if the width dimension A of the base portion is longer than 6 times the thickness dimension of the metal plate of the mounting clip 5, the resilient bulging portions 52 become unlikely to bend (be elastically deformed) inward when the mounting clip 5 is inserted into the rectangular hole Bh, which makes the mounting work to mount the assist grip on the body panel B difficult.

Thus forming the base portion of the resilient bulging portions 52 with a width dimension A that is 1/3 to 2/3 times the width dimension B of the leading end portion of the resilient bulging portion 52 can improve the mounting clip 5 in durability, that is, the mounting durability of the assist grip and allows easily performing the mounting work to the body panel. Moreover, the width dimension A of the base portion of the resilient bulging portion 52 is provided as 4 to 6 times the thickness dimension of the metal plate of the mounting clip 5, so that during mounting of the assist grip, the elastic deformation of the resilient bulging portion 52 is made easy, while the mounting strength of the assist grip 5 is sufficiently secured.

In addition, the load to insert the mounting clip 5 during mounting of the assist grip can be adjusted by changing the inclined side portions 52a of the resilient bulging portion 52 in inclination angle to change the width dimension A of the base portion, and for increasing the insertion load of the mounting clip 5, it suffices to lengthen the width dimension A in the range described above, and for reducing the insertion load, to shorten the width dimension A.

As described above, the resilient bulging portions 52 at both sides of the mounting clip 5 are each formed in an elastically deformable manner so as to project outward relative to the resilient leg 51, and the resilient bulging portion 52 is formed at the leading end with a first retention portion 53 bent in a substantially laid V-shape and a second retention portion 57 in a flat plate shape. Thus, when the mounting clip 5 is inserted in the rectangular hole Bh of the body panel B to serve as a mounting location, the first retention portion 53 is retained by the periphery of the rectangular hole Bh, and the leading end of the second retention portion 57 is retained by the back (inner surface) of the body panel B.

That is, as shown in Fig. 9 to Fig. 12, the first retention portion 53 is formed bent in a laid V-shape at the middle of the leading end portion of the resilient bulging portion 52, and the second retention portions 57 are provided on both sides of the first retention portion 53, in plate shapes parallel to the plane of the resilient bulging portion 52, in a projecting manner inclined in an oblique direction.

As shown in Fig. 9 and Fig. 10, the resilient legs 51 at both sides each further include a stepped region 54 formed in the vicinity of the leading end and bent substantially perpendicular to the leg, and include at the leading end side of the stepped region 54 a projecting region 56 extending substantially in parallel to the inserting direction of the mounting clip 5, that is, substantially in parallel to the resilient leg 51, which forms a leading end portion. The projecting region 56 includes at a central part a retaining pawl 55 formed in such a manner as to cut and raise the central part to project outward.

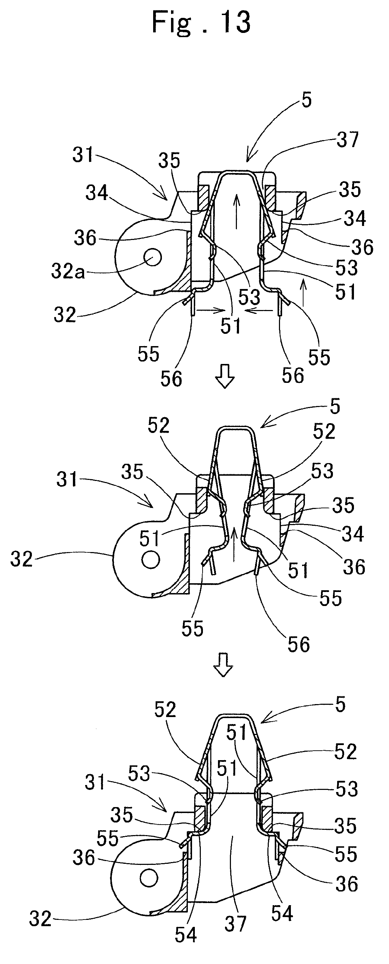

As shown in Fig. 13, when assembling the mounting clip 5 to the hinge body 31, the head of the mounting clip 5 is inserted into the rectangular opening 37 of the hinge body 31 from the front side, and the mounting clip 5 is then pushed up to the insertion end, and at this time, the stepped regions 54 at both sides of the mounting clip 5 are retained by inner peripheral regions provided at both sides of the rectangular opening 37, and the retaining pawls 55 at both sides enter the holes 34 at both sides in the rectangular opening 37 of the hinge body 31, to be held by the holding regions formed at the front side of the holes 34.

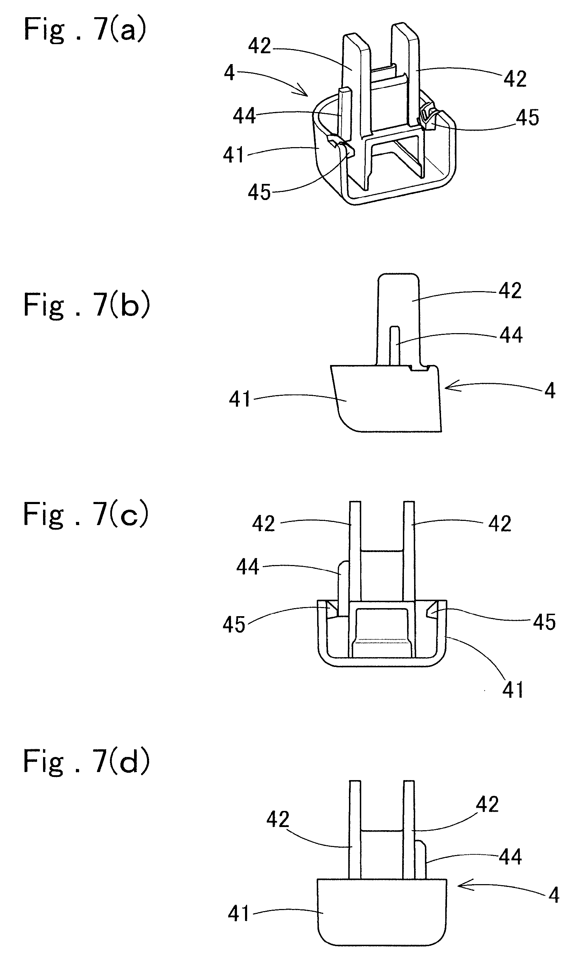

The covers 4 are assembled to the front side of the hinge bodies 21, 31 so as to cover the front of the hinge bodies 21 and 31, respectively. As shown in Fig. 7(a) to Fig. 7(c), each of the covers 4 includes a main cover body 41 that covers the front of the hinge body 21, 31, and a pair of clip support portions 42 provided projecting at the back side of the main cover body 41.

As described above, at the front of the hinge bodies 21, 31 at both sides, the cover 4 is fitted so as to cover the front thereof by a main cover body 41, and at the back side of the main cover body 41, the pair of clip support portions 42 is provided in a projecting manner, and the clip support portions 42 are inserted into the rectangular opening 27, 37 of the hinge body 21, 31 together with the mounting clip 5. In order to smoothly perform such insertion work, at the outer surface of the clip support portion 42, as shown in Fig. 6, Fig. 7(a) to Fig. 7(c), and Fig. 8(a) to Fig. 8(c), a guide rib 44 is provided in a direction to push in the same.

Further, a guide groove 21c, 31c that is fittable with the guide rib 44 is, as shown Fig. 5 and Fig. 6, provided at the inside of the rectangular frame 21 a, 31 a of the hinge body 21, 31, that is, the inner surface of the rectangular opening 27, 37. Thus, as shown in Fig. 8(a) to Fig. 8(c), when the cover 4 is pushed in the hinge assembly 2 or 3 so as to insert the clip support portions 42 of the cover 4 into the rectangular opening 27, 37 of the hinge assembly 2 or 3, the guide rib 44 is fitted with the guide groove 21 c, 31 c on the hinge body 21, 31 to slide in contact, so that the cover 4 can be always appropriately fitted in without inclination.

In addition, the positional relationship between the guide groove and the guide rib may be opposite to the above, and the guide rib may be provided projecting at the inner surface of the rectangular opening 27, 37 of the hinge body 21, 31, and the guide groove may be provided on the main cover body 41 of the cover 4. Moreover, in the above, the single guide rib 44 was fitted and slid in contact with the single guide groove 21 c or 31 c to fit in the cover 4, but as long as the strength of a member on which guide grooves are provided is sufficient, two guide grooves or guide ribs may be provided at both inner sides of the rectangular opening 27, 37 of the hinge body 21,31, guide ribs or guide grooves may be provided corresponding thereto at both sides of the main cover body 41 of the cover 4, so as to be fitted together and slide in contact.

On the other hand, the main cover body 41 is provided at both inner sides with engaging pawls 45 to be engaged with the cover engaging portions 39 provided at both sides of the hinge body 21, 31, as shown in Fig. 7(a) to Fig. 7(c). The cover 4 is provisionally mounted by the engaging pawls 45 to the hinge body 21, 31, and is securely fixed by pushing in relative to the hinge body 21, 31 at the final stage.

A torsion coil spring 6 for biasing the grip body 1 to a non-use position (state indicated by solid lines in Fig. 3) relative to the hinge assemblies 2, 3 is set between the inner support 22 and the outer support 23 of the hinge body 21 placed in the right hinge cavity 11. As shown in Fig. 5, the torsion coil spring 6 includes a first end segment 61 and a second end segment 62, and the first end segment 61 is, when the torsion coil spring 6 is set, retained in the vicinity of the inner side of the inner support 22 of the hinge body 21, and the second end segment 62 of the torsion coil spring 6 is held in a holding recess 11a formed in the hinge cavity 11 of the grip body 1 (Fig. 4). The torsion coil spring 6 is thus disposed between the outer support 23 and the inner support 22 of the hinge cavity 11 so as to bias the grip body 1 into a non-use state relative to the hinge body 21.

As shown in Fig. 4 and Fig. 6, an oil damper 8 is set between the inner support 32 and the outer support 33 of the hinge body 31 placed in the left hinge cavity 12. The oil damper 8 includes a cylindrical inner tube 82 and an outer tube 81 attached around the inner tube 82 in a rotatable manner, and a void space formed between the inner tube 82 and the outer tube 81 is filled with oil, so that a braking force is produced by viscosity resistance of the oil when the inner tube 82 and the outer tube 81 rotate relative to each other.

The oil damper 8 includes a shaft hole 83 formed at the axial center position of the inner tube 82, and the pivot shaft 16 is inserted through the shaft hole 83 as shown in Fig. 4. Moreover, as shown in Fig. 6, an oblong boss 84 is provided projecting at a leading-end pivoting position of the inner tube 82, so that when the oil damper 8 is inserted between the inner support 32 and the outer support 33 of the hinge body 31, the oblong boss 84 is fitted in an oblong boss recessed region 32b formed at the inner side of the inner support 32.

On the other hand, the oil damper 8 is provided at an outer circumference of the outer tube 81 with a linear protrusion 85 in a projecting manner, so that when the oil damper 8 is inserted between the inner support 32 and the outer support 33 of the hinge body 31, the linear protrusion 85 is engaged with a linear protrusion engaging portion 12a (Fig. 4) provided inside the hinge cavity 12, and when the grip body 1 is operated to rotate, the outer tube 81 of the oil damper 8 rotates together with the grip body 1. Since the hinge assembly 3 is secured to the body panel B of the vehicle body, and the inner tube 82 of the oil damper 8 is held at the oblong boss 84 of its end portion by the inner support 32, the inner tube 82 of the oil damper 8 rotates relative to the outer tube 81 when the grip body 1 is rotated about the hinge assembly 3, so as to exert an appropriate rotational resistance.

When the assist grip is assembled, first, the mounting clips 5 are assembled to the hinge bodies 21, 31 at both sides, respectively. The mounting clips 5 are assembled, as shown in Fig. 5 and Fig. 6, by inserting the heads of the mounting clips 5 from the front side of the hinge bodies 21, 31 into the rectangular openings 27, 37, respectively, and pushing in the mounting clips 5 to the back side. At this time, the mounting clips 5 easily enter into the rectangular openings 27, 37 of the hinge bodies 21, 31, as shown in Fig. 13, by only slightly flexing the resilient legs 51 inward, and at an ingress end thereof, the stepped regions 54 abut against the inner peripheral regions 35 of the hinge bodies 21, 31, respectively, and the retaining pawls 55 are retained by the holding regions 36 of the hinge bodies 21, 31, respectively.

Subsequently, the hinge body 21 is located at a predetermined position in the hinge cavity 11 with the torsion coil spring 6 placed between the inner support 22 and the outer support 23 of the right hinge body 21, the pivot shaft 15 is inserted into the shaft hole 13 from the outside of the hinge cavity 11, and then penetrated through the torsion coil spring 6 from the shaft hole 23a of the outer support 23 as in Fig. 4, and the pivot shaft 15 is further inserted through the shaft hole 22a of the inner support 22, and then the leading end of the pivot shaft 15 is inserted into the other shaft hole 13.

Thus, the right hinge body 21 is pivotally supported relative to the grip body 1, and at this time, the first end segment 61 of the torsion coil spring 6 is retained by a part of the hinge body 21, and the second end segment 62 is held in the periphery of the hinge cavity 11 of the grip body 1, so that the hinge body 21 is biased toward the hinge cavity 11 due to a spring force of the torsion coil spring 6 to enter into the hinge cavity 11.

Similarly, in the left hinge body 31, the hinge body 31 is located at a predetermined position in the hinge cavity 12 with the oil damper 8 interposed between the inner support 32 and the outer support 33, the pivot shaft 16 is inserted into the shaft hole 14 of the hinge cavity 12 from the outside, and then penetrated through the oil damper 8 from the shaft hole 33a of the outer support 33, and the pivot shaft 16 is further inserted through the shaft hole 32a of the inner support 32, and then the leading end of the pivot shaft 16 is inserted into the other shaft hole 14.

Thus, the hinge body 31 is pivotally supported relative to the grip body 1, and at this time, the oblong boss 84 of the oil damper 8 fits in the oblong boss recessed region 32b at the inner side of the inner support 32, and the linear protrusion 85 on the outer tube of the oil damper 8 is held by the linear protrusion engaging portion 12a of the hinge cavity 12 of the grip body 1, so that rotational resistance is exerted to the hinge body 31 due to viscosity resistance of the oil of the oil damper 8.

Thereafter, the covers 4 are provisionally mounted to the front of the hinge bodies 21, 31, respectively. In the case of provisionally mounting the covers 4, as shown in Fig. 5, Fig. 6, and Fig. 8(a) to Fig. 8(c), each cover 4 is fitted in by inserting the clip support portion 42 provided projecting on the back side of the cover 4 up to an intermediate position in the rectangular opening 27, 37 of the hinge body 21, 31, for provisional mounting.

In the provisionally mounted state, the engaging pawls 45 of the cover 4 are engaged in front of the cover engaging portions 29, 39 of the hinge body 21, 31. In addition, illustration of the mounting clip 5 in the hinge body 31 of the hinge assembly 3 is omitted in Fig. 8, but in actuality, the pair of clip support portions 42 of the cover 4 are inserted and provisionally mounted with the mounting clip 5 inserted in the hinge body 31 as described above.

Moreover, at this time, since the guide rib 44 provided at the side of the main cover body 41 of the cover 4 is fitted and slidingly contacts the guide groove 21c, 31c at the inner surface of the rectangular opening 27, 37 of the hinge body 21, 31 for insertion, the cover 4 can be easily inserted to an appropriate position. In addition, the provisionally mounted covers 4, when the clip support portions 42 and the mounting clips 5 thereof are fitted into the rectangular holes Bh of the body panel B, reach a state where the resilient bulging portions 52 and the like of the mounting clips 5 are movable to be mounted.

When the assist grip is secured to the body panel (a bracket portion of the body panel) B at the inner side of a trim material T provided on a ceiling surface or side wall surface inside a vehicle compartment, the grip body 1 of the assist grip is held to push the leading ends of the clip support portions 42 and the mounting clips 5 of the hinge assemblies 2 and 3 located on opposite bases thereof into rectangular holes Bh formed on the body panel B.

At this time, the mounting clip 5 elastically deforms the resilient bulging portions 52 thereof inward while entering into the rectangular hole Bh. In this case, since the resilient bulging portion 52 is formed at both sides with inclined side portions 52a so that the resilient bulging portion 52 has a width of its base portion shorter than that of the leading end portion, even when the plate thickness of the metal plate being the material for the mounting clip 5 is made thicker than the conventional thickness to increase the mounting durability of the assist grip, the bulging resilient bulging portions 52 are easily elastically deformed inward when inserting the mounting clip 5 into the rectangular hole Bh to allow the insertion relatively simply without increasing the insertion load, so that assembling work can be easily performed.

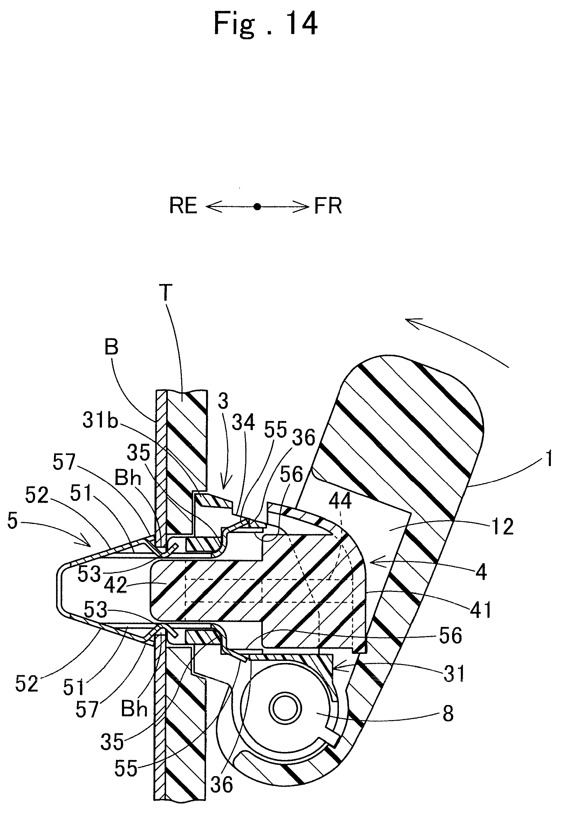

Then, when the resilient bulging portions 52 of the mounting clips 5, 5 are completely inserted into the rectangular holes, the first retention portions 53 and the second retention portions 57 of the resilient bulging portions 52 are elastically restored so as to open outward into a state where the first retention portions 53 are held by the peripheries of the rectangular holes Bh of the body panel B, and the leading ends of the second retention portions 57 are retained by the back (inner surface) of the body panel B (Fig. 14).

Thus, it reaches a state where the peripheries of the rectangular holes Bh of the body panel B are clamped between the seat portions 21 b, 31 b of the hinge bodies 21, 31 and the second retention portions 57, and as a result of the second retention portions 57 of the resilient bulging portions 52 being held at their leading ends by the back of the body panel B, the hinge bodies 21, 31 are assembled and secured to the body panel B with a high pullout resistance.

Thereafter, the covers 4 in a provisionally mounted state are, as shown in Fig. 14, pushed into interiors of the hinge bodies 21, 31. At this time, the engaging pawls 45 formed at the inner side of the covers 4 are completely fitted in and engaged with the cover engaging portions 39 formed at both sides of the hinge bodies 21, 31. Moreover, at this time, since the guide rib 44 provided at the side of the main cover body 41 of the cover 4 is fitted and slidingly contacts the guide groove 21c, 31c at the inner surface of the rectangular opening 27, 37 of the hinge body 21, 31 and the cover 4 is pushed into the hinge body 21, 31, the cover 4 enters into the hinge body 21, 31 upright without inclination, and the engaging pawls 43 of the cover 4 are lastly engaged with the cover engaging portions 39 of the hinge body 21, 31, so that the cover 4 is fitted to an appropriate position.

As described above, when pushing in the provisionally mounted cover 4, since the cover 4 is pushed in as a result of the guide rib 44 thereof sliding in contact within the guide groove 21c, 31c, the cover 4 appropriately enters without inclination, so that the cover 4 can be fitted with excellent workability.

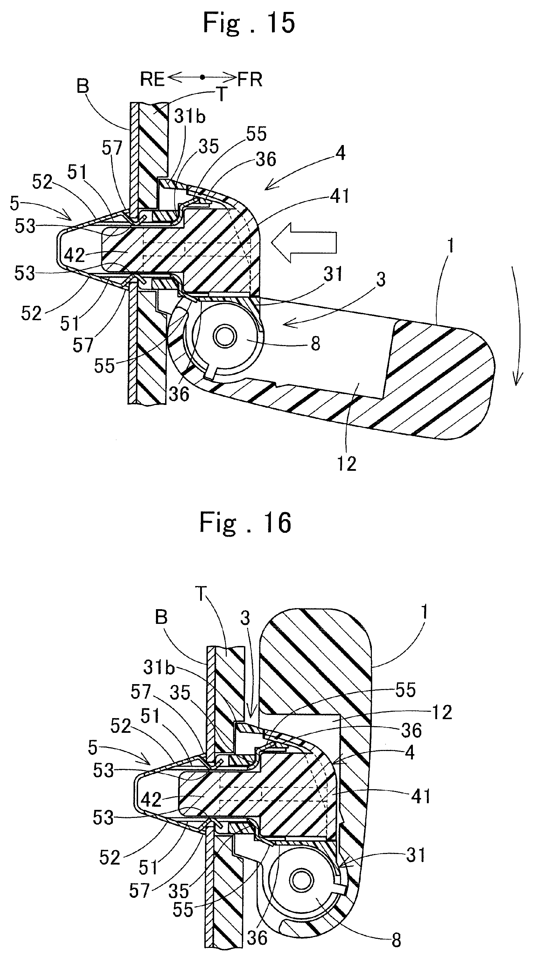

In this state, as shown in Fig. 15 and Fig. 16, the clip support portions 42 of the covers 4 completely fit in the interiors of the mounting clips 5, 5, which makes the first retention portions 53 and the second retention portions 57 of the resilient bulging portions 52 of the mounting clips 5 be tightly secured to the body panel B at mounting locations of the vehicle body and completes the mounting of the assist grip.

Since the inclined side portions 52a are thus formed at both sides of the resilient bulging portion 52 in a tapering manner from the leading end portion side toward the base portion so that the width dimension A of the base portion of the resilient bulging portion 52 becomes shorter than the width dimension B of the leading end portion, even when the plate thickness of the mounting clip 5 is made thicker than that of a conventional one, the inward elastic deformation of the resilient bulging portions 52 is enabled at a small load when mounting the assist grip on the body panel B. The mounting clip 5 can thereby be easily inserted into the rectangular hole Bh to improve the workability of the mounting work, allowing mounting the assist grip on a side wall or the like of a vehicle compartment with efficiency.

Particularly, when the base portion of the resilient bulging portion 52 is formed with a width dimension A that is 1/3 to 2/3 times the width dimension of the leading end portion of the resilient bulging portion 52 or when the base portion of the resilient bulging portion 52 is formed with a width dimension A that is 4 to 6 times the thickness dimension of the metal plate of the mounting clip 5, the mounting durability of the assist grip can be maintained excellent, while the inward elastic deformation of the resilient bulging portion 52 during mounting can be made easy to easily perform the mounting work. Moreover, since the mounting clip 5 is formed with, as the plate thickness of a steel plate being the material therefor, a plate thickness of 1.4 times that of a conventional mounting clip, the assist grip is greatly improved in mounting durability.

For using the assist grip, a user rotates the grip body 1 to the lower side about the hinge assemblies 2, 3 to use the assist grip as shown in Fig. 3. The grip body 1 is pulled downward at its central region by the user, and at this time, the torsion coil spring 6 is twisted at the second end segment 62 against its torsion spring force by a rotation of the holding recess 11 a of the hinge cavity 11 in the grip body 1. Thus the grip body 1 rotates to the lower side against the torsion spring force, and the grip body 1 is kept in an in-use state by the user gripping the grip body 1.

On the other hand, when the user releases his/her hand from the grip body 1 in an in-use state of the assist grip, the grip body 1 rotates upward due to an upward (clockwise, in Fig. 3) biasing force exerted by the second end segment 62 of the torsion coil spring 6 and returns into a non-use state (the position indicated by solid lines in Fig. 3), and at this time, the oil damper 8 acts to brake the rotation of the grip body 1, so that the grip body 1 returns to the non-use position at low speed.

### Reference Signs List

- 1: Grip body
- 2: Hinge assembly
- 3: Hinge assembly
- 4: Cover
- 5: Mounting clip
- 8: Oil damper
- 11: Hinge cavity
- 11a: Holding recess
- 12: Hinge cavity
- 12a: Linear protrusion engaging portion
- 13: Shaft hole
- 14: Shaft hole
- 15: Pivot shaft
- 16: Pivot shaft
- 21: Hinge body
- 21a: Rectangular frame
- 21b: Seat portion
- 21c: Guide groove
- 22: Inner support
- 22a: Shaft hole
- 23: Outer support
- 23a: Shaft hole
- 24: Cover engaging portion
- 27: Rectangular opening
- 28: Projection
- 29: Cover engaging portion
- 31: Hinge body
- 31a: Rectangular frame
- 31b: Seat portion
- 31c: Guide groove
- 32: Inner support
- 32a: Shaft hole
- 32b: Oblong boss recessed region
- 33: Outer support
- 33a: Shaft hole
- 34: Hole
- 35: Inner peripheral region
- 36: Holding region
- 37: Rectangular opening
- 39: Cover engaging portion
- 41: Main cover body
- 42: Clip support portion
- 43: Engaging pawl
- 44: Guide rib
- 45: Engaging pawl
- 51: Resilient leg
- 52: Resilient bulging portion
- 52a: Inclined side portion
- 53: First retention portion
- 54: Stepped region
- 55: Retaining pawl
- 56: Projecting portion
- 57: Second retention portion
- 61: First end segment
- 62: Second end segment
- 81: Outer tube
- 82: Inner tube
- 83: Shaft hole
- 84: Oblong boss
- 85: Linear protrusion

## Claims

1. An assist grip comprising:
a grip body including hinge cavities on bases provided at opposite left and right ends;
hinge assemblies including a pair of hinge bodies to be pivotally connected to the hinge cavities at opposite sides via pivot shafts;
mounting clips each formed by bending a metal plate having spring resiliency into a substantially U-shape and with resilient legs provided at both sides, the resilient legs at both sides including resilient bulging portions bulging outward, and the mounting clips to be respectively inserted into rectangular openings provided substantially at the center of the pair of hinge bodies; and
covers each including a pair of plate-shaped clip support portions inserted into the inside of the resilient legs at both sides of the mounting clip and provided in a projecting manner in parallel, and to be fitted to the hinge body so as to cover a front surface of the hinge assembly,
the assist grip being mounted by inserting the mounting clip and the clip support portion of the cover into a rectangular hole provided on the body panel and securing the hinge assembly to the body panel, **characterized in that**
the resilient bulging portion of the mounting clip is provided at both sides of a leading end portion thereof with second retention portions that abut against an inner side of the body panel in such a manner as to obliquely open outward and provided at a middle of the leading end portion with a first retention portion that abuts against a periphery of the rectangular hole of the body panel in an inwardly bent manner, and is formed at both sides with inclined side portions so that the resilient bulging portion has a width of its base portion shorter than a width of the leading end portion.

2. The assist grip as set forth in claim 1, wherein the base portion of the resilient bulging portion is formed with a width dimension that is 1/3 to 2/3 times a width dimension of the leading end portion of the resilient bulging portion.

3. The assist grip as set forth in claim 1, wherein the base portion of the resilient bulging portion is formed with a width dimension that is 4 to 6 times a thickness dimension of the metal plate of the mounting clip.
